# EUROPÄISCHE PATENTSCHRIFT

(11) **EP 0 340 209 B1**
(45) Veröffentlichungstag und Bekanntmachung des Hinweises auf die Patenterteilung: **21.07.1993**
(21) Anmeldenummer: 89890120.2
(22) Anmeldetag: 25.04.1989
(51) Int. Cl.: F16H 1/445

(54) **Sperre für ein Differentialgetriebe für Kraftfahrzeuge**
Locking device for a differential of a motor vehicle
Dispositif de verrouillage pour un différentiel d'un véhicule à moteur

(30) Priorität: 26.04.1988 AT 1054/88
(43) Veröffentlichungstag der Anmeldung: 02.11.1989
(73) Patentinhaber: Hierzenberger, Kurt, A-8704 Leoben (AT); Hierzenberger, Rudolf, A-8704 Leoben (AT)
(72) Erfinder: Hierzenberger, Kurt, A-8704 Leoben (AT); Hierzenberger, Rudolf, A-8704 Leoben (AT)
(74) Vertreter: Brauneiss, Leo, Dipl.Ing.

(56) Entgegenhaltungen:
- EP-A- 0 090 944
- DE-A- 1 954 534
- FR-A- 2 434 969
- GB-A- 268 017
- US-A- 2 874 790

## Beschreibung

Die Erfindung betrifft eine Sperre für ein Differentialgetriebe für Kraftfahrzeuge, mit einer im Differentialgetriebe oder in einem mit einer Welle desselben in Antriebsverbindung stehenden Teil, beispielsweise einer Sperrlamellenkupplung, vorgesehenen Sperreinrichtung, wobei mechanisch wirkende Mittel vorgesehen sind, die bei Auftreten einer Drehzahldifferenz bzw. einer Drehmomentdifferenz zwischen wenigstens zwei Ausgangswellen und/oder zwischen der Eingangswelle und wenigstens einer Ausgangswelle des Differentialgetriebes bzw. des damit in Antriebsverbindung stehenden Teiles, sowie in Abhängigkeit von der Lenkbewegung des Kraftfahrzeuges die Sperreinrichtung stufenlos betätigen und dadurch die Differentialwirkung zumindest teilweise aufheben.

Die meisten bekannten Sperren für Differentialgetriebe sind mediumbedingt, d.h., sie entnehmen die Energie, die sie für ihre Betätigung benötigen, der Drehbewegung der Achse oder einer Feder, wobei die Sperrwirkung durch das Eingangsdrehmoment und/oder durch die Differenzdrehzahl der Antriebsräder und/oder durch Federkraft unabhängig vom Lenkeinschlag gesteuert wird. Diese bekannten Konstruktionen weisen den Nachteil auf, daß die Sperreinrichtung nicht nur bei Auftreten einer Differenzdrehzahl zwischen den Antriebsrädern, z.B. wenn sich ein Antriebsrad durchdreht, anspricht, sondern z.B. auch dann, wenn eine Kurve durchfahren wird. Daher muß bei diesen bekannten Konstruktionen mit Rücksicht auf den Fahrwiderstand und den Reifenverschleiß die Bremswirkung der Sperreinrichtung und/oder die Differenzdrehzahl, bei welcher die Sperreinrichtung anspricht, begrenzt werden. Dieser Nachteil tritt auch bei allen hydraulisch wirkenden Sperreinrichtungen auf, wie beispielsweise bei der sogenannten Visco-Kupplung.

Die DE-A-1 954 534 zeigt sämtliche Merkmales des Oberbegriffes des Anspruchs 1 und beschreibt ein Differentialgetriebe mit einer Kegelkupplung zwischen einem Seitenrad und dem Gehäuse, wobei eine Sperreinrichtung bei Auftreten einer Drehmomentdifferenz zwischen der Eingangswelle und einer Ausgangswelle stufenlos betätigt wird. Eine zusätzliche Betätigung der Sperreinrichtung erfolgt hydraulisch mittels einer Kolbenanordnung, die mit dem Druck der Servolenkung gespeist wird. Eine solche bekannte Anordnung ist nur bei eine Servolenkung aufweisenden Kraftfahrzeugen verwendbar und erfordert eine hydraulische Einrichtung.

Es sind weiters mechanisch betätigte Sperren für Differentialgetriebe bekannt (GB-A-268 017, US-A-2 874 790, DE-A-27 58 252), bei welchen die Sperreinrichtung ausschließlich durch den Lenkeinschlag gesteuert wird. Diese bekannten Konstruktionen weisen den Nachteil auf, daß sie bei Geradeausfahrt auch dann einen hohen Sperrgrad aufweisen, wenn dies unerwünscht ist. Dies ist beispielsweise dann der Fall, wenn infolge ungleichmäßigen Verschleißes der Antriebsräder diese verschieden große Rollumfänge aufweisen und sich daher verschieden schnell drehen müssen, um einen einwandfreien Geradauslauf zu erzielen. Ein weiterer Nachteil bei diesen bekannten Konstruktionen besteht darin, daß sie auch bei Kurvenfahrt unwirksam werden können, nämlich dann, wenn ein Antriebsrad so stark rutscht, daß das andere Antriebsrad zum Stillstand kommt, weil sie schon auf Grund des bei Kurvenfahrt vorhandenen Lenkeinschlages abgeschaltet werden.

Um diesen Nachteil zu beseitigen, sind auch elektronisch arbeitende Systeme bekannt, die die einzelnen Raddrehzahlen, den Lenkeinschlag und gegebenenfalls noch weitere Parameter mittels Sensoren erfassen und in einem Mikroprozessor verarbeiten (EP-A- 0 090 944, FR-A- 2 434 969, SU-A-1 115 928, SU-A-1 362 673). Oer Mikroprozessor entscheidet dann, ob, und fallweise wie stark, die Sperreinrichtung zu betätigen ist. Dadurch ist es möglich, den Istwert der Raddrehzahlen bei allen möglichen Betriebszuständen dem Sollwert nahezu völlig anzugleichen. Ein wesentlicher Nachteil dieser elektronisch arbeitenden Konstruktionen liegt im großen baulichen Aufwand, denn diese Konstruktionen benötigen nicht nur einen aufwendigen Mikroprozessor, sondern auch eine von diesem gesteuerte Hydraulik oder Pneumatik als Servounterstützung. Der große Bauaufwand verursacht weiters eine erhöhte Reparaturanfälligkeit, einen größeren Serviceaufwand und nicht zuletzt einen hohen Preis. Außerdem sind diese bekannten Konstruktionen sehr anfällig gegen starke Erschütterungen und bei einem rauhen Einsatz des Kraftfahrzeuges nicht geeignet, weshalb ihre Verwendung bei Lastkraftwagen, Radladern, Traktoren und ähnlichen Fahrzeugen nicht möglich ist.

Es ist Aufgabe der vorliegenden Erfindung, die Nachteile der bekannten Konstruktionen zu vermeiden und eine stufenlos arbeitende Sperre für ein Differentialgetriebe für Kraftfahrzeuge zu schaffen, die mit einem Minimum an mechanischen Bauteilen das Auslangen findet, alle in der Praxis vorkommenden Betriebszustände berücksichtigt, betriebssicher arbeitet und auf bekannten und bewährten Konstruktionen aufbaut. Zur Lösung dieser Aufgabe schlägt die Erfindung vor, daß ein an der Lenkwelle drehfest befestigter Teil über wenigstens ein vorzugsweise von einem Bowdenzug gebildetes Übertragungsorgan mit einer Schaltgabel derart verbunden ist, daß bei einer Verdrehung der Lenkwelle die Schaltgabel bewegt wird, und daß die Schaltgabel in eine die Sperreinrichtung betätigende, verschiebbare Schaltmuffe eingreift.

Hiebei sind verschiedene Ausführungen möglich. So kann erfindungsgemäß die Sperreinrichtung unmittelbar von der Lenkbewegung des Fahrzeuges beeinflußbar sein. Es ist aber auch eine indirekte Beeinflussung dieser Sperreinrichtung durch Veränderung der Einschaltdifferenzdrehzahl durch den Lenkeinschlag sowie gegebenenfalls der Absolutdrehzahl und der Lenkrichtung möglich, wobei verschiedene Möglichkeiten auch miteinander kombiniert werden können. Die direkte Beeinflussung der zusätzlichen Mittel durch den Lenkeinschlag stellt hiebei die einfachste und billigste Ausführungsform dar. Die indirekte Beeinflussung insbesondere bei Berücksichtigung der Absolutdrehzahl und der Lenkrichtung stellt die beste Lösung in Bezug auf die Anpassung der Istwerte an die Sollwerte dar.

Weitere Merkmale und Vorteile der Erfindung ergeben sich aus der folgenden Beschreibung in Verbindung mit den beiliegenden Zeichnungen. In diesen zeigen:
Fig.1 eine Ausführungsform eines Lenkwinkelgebers und Lenkrichtungsgebers für eine erfindungsgemäße Differentialsperre;
Fig.2 ein Steuergestänge für eine erfindungsgemäße Differentialsperre;
Fig.3 einen Schnitt durch ein Differential gemäß EP-A-0132759 mit einer Steuermuffe zur Bildung der erfindungsgemäßen Differentialsperre;
Fig.4 eine Teilansicht des Differentials nach Fig.3 in Richtung des Pfeiles IV in Fig.3;
Fig.5 einen Schnitt nach der Linie V - V in Fig.4;
Fig.6 einen Schnitt durch ein Differential gemäß DE-B-22 35 107 mit einer Steuermuffe zur Bildung der erfindungsgemäßen Differentialsperre;
Fig.7 einen Schnitt nach der Linie VII - VII in Fig.6;
Fig.8 eine teilweise Draufsicht auf die Steuermuffe nach Fig.6;
Fig.9 in Schnitt eine weitere Umgestaltung eines Differentials gemäß EP-A-0 132 759 zur Bildung einer erfindungsgemäßen Differentialsperre;
Fig.10 ein Detail von Fig.9 in Ansicht;
Fig.11 einen Schnitt nach der Linie XI - XI in Fig.10;
Fig.12 im Schnitt ein Differential gemäß DE-B-1922 964 mit einer Steuermuffe zur Bildung einer erfindungsgemäßen Differentialsperre;
Fig.13 im Schnitt die Ausbildung einer Sperrlamellenkupplung, die als Sperreinrichtung bei einer erfindungsgemäßen Differentialsperre eingesetzt werden kann;
Fig.14 in Ansicht ein Detail der Sperrlamellenkupplung nach Fig.13;
Fig.15 ein weiteres Detail der Sperrlamellenkupplung nach Fig.13 in Seitenansicht;
Fig.16 das Detail nach Fig. 15 in Vorderansicht;
Fig.17 im Schnitt die Ausbildung eines einfachen Sollwertreglers für eine erfindungsgemäße Differentialsperre;
Fig.18 ein Detail des einfachen Sollwertreglers nach Fig.17 in Ansicht;
Fig. 19 einen Schnitt nach der Linie XIX - XIX in Fig. 18;
Fig. 20 ein weiteres Detail des einfachen Sollwertreglers nach Fig.17 in Ansicht;
Fig. 21 einen Schnitt nach der Linie XXI - XXI in Fig. 20; und
Fig.22 im Schnitt die Ausbildung eines kombinierten Sollwertreglers für eine erfindungsgemäße Differentialsperre.

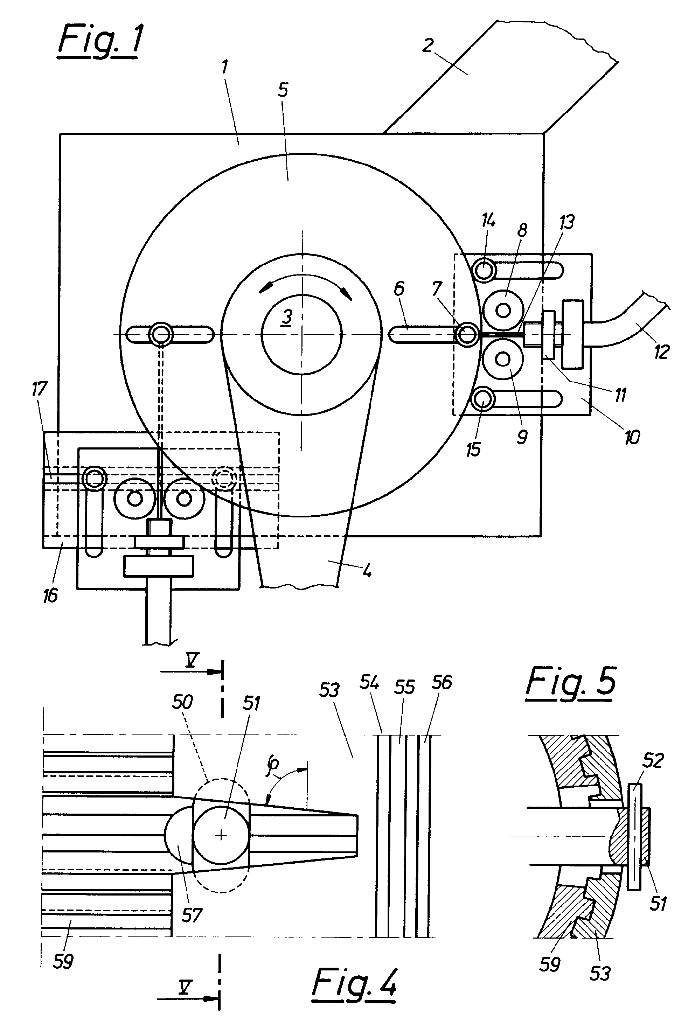

Im folgenden wird die in Fig.1 dargestellte Konstruktion näher erläutert. Ein Lenkgetriebe 1 bekannter Bauart ist in bekannter Weise mit einer zum Lenkrad führenden Lenksäule 2 verbunden. Aus dem Lenkgetriebe 1 führt eine Lenkwelle 3 heraus, auf welcher ein Lenkhebel 4 drehfest angebracht ist. Mit dem Lenkhebel ist weiters eine Teilscheibe 5 verdrehfest verbunden, die mindestens einen Schlitz 6 aufweist, in dem eine Klemmschraube 7 angeordnet ist, die das Ende eines Bowdenzuges 13 mit der Teilscheibe 5 verbindet. Der Bowdenzugmantel 12 ist in üblicher Form an einem Widerlager 11 abgestützt, welches zusammen mit zwei drehbar gelagerten Umlenkrollen 8 und 9 auf einer Grundplatte 10 angeordnet ist, die mittels Schrauben 14 und 15 am Lenkgetriebe 1 justierbar befestigt ist. Wird das Lenkrad aus der Nullstellung nach links oder rechts gedreht, so dreht sich die Lenkwelle 3 in eine der Pfeilrichtungen und nimmt dabei den Lenkhebel 4 und die Teilscheibe 5 mit. Bei der in Fig.1 rechts dargestellten Ausführungsform wird dadurch der mittels der Klemmschraube 7 befestigte Bowdenzug 13 aus seinem Mantel 12 herausgezogen, wobei die beiden drehbar gelagerten Umlenkrollen 8 und 9 das Abknicken des Bowdenzuges 13 verhindern und für geringe Reibung sorgen. Der Schlitz 6 und die relative Lage der Grundplatte 10 dienen dabei zum Einstellen der Charakteristik dieser Mechanik. Befindet sich die Klemmschraube 7 nahe an den Umlenkrollen 8 und 9, so erfolgt das Herausziehen des Bowdenzuges 13 nahezu linear zum Drehwinkel der Lenkwelle 3. Wird die Klemmschraube 7 jedoch von der Grundplatte 10 weiter weg befestigt, so wird diese Funktion progressiv. Befestigt man die Klemmschraube 7 weiter innen im Schlitz 6 und bleibt der Abstand zu den Umlenkrollen 8,9 durch das Mitbewegen der Grundplatte 10 gleich groß, kann der Absolutwert der Bewegung verkleinert werden. Zum Abgleich der Bowdenzuglänge dient in bekannter Weise das Widerlager 11. Dadurch, daß beide Verstellmöglichkeiten überlagert werden können, ist es möglich, den Lenkwinkelgeber an praktisch jedes Lenkgetriebe anzupassen.

Der eben beschriebene Lenkwinkelgeber erfaßt den Lenkeinschlag unabhängig von der Lenkrichtung.

Die in Fig.1 links unten dargestellte Konstruktion zeigt einen Lenkrichtungsgeber. Er ist mit dem in Fig.1 rechts dargestellten Lenkwinkelgeber im wesentlichen identisch und unterscheidet sich von diesem nur dadurch, daß der Bowdenzug 13 nicht in radialer, sondern in tangentialer Richtung zur Teilscheibe 5 verläuft. Um ihn seitlich ausrichten zu können wird er mittels der Schrauben 14 und 15 in einer T-förmigen Nut 17 eines Winkelstückes 16 befestigt. Das Winkelstück 16 ist mit dem Lenkgetriebe 1 verschraubt.

Dieser Lenkrichtungsgeber erfaßt zum Unterschied vom Lenkwinkelgeber nicht nur den Lenkwinkel, sondern auch die Lenkrichtung. Die eben beschriebenen Geber stellen nur eine von einer Vielzahl von denkbaren Ausführungsmöglichkeiten dar. Die von einem dieser Geber erzeugte definierte Steuerbewegung kann statt durch den Bowdenzug natürlich auch durch andere Transmissionen übertragen werden. Hat das Fahrzeug mehr als eine Treibachse, so kann die Teilscheibe mit mehreren Schlitzen versehen sein, so daß eine Mehrzahl von Gebern gleichzeitig bedient wird.

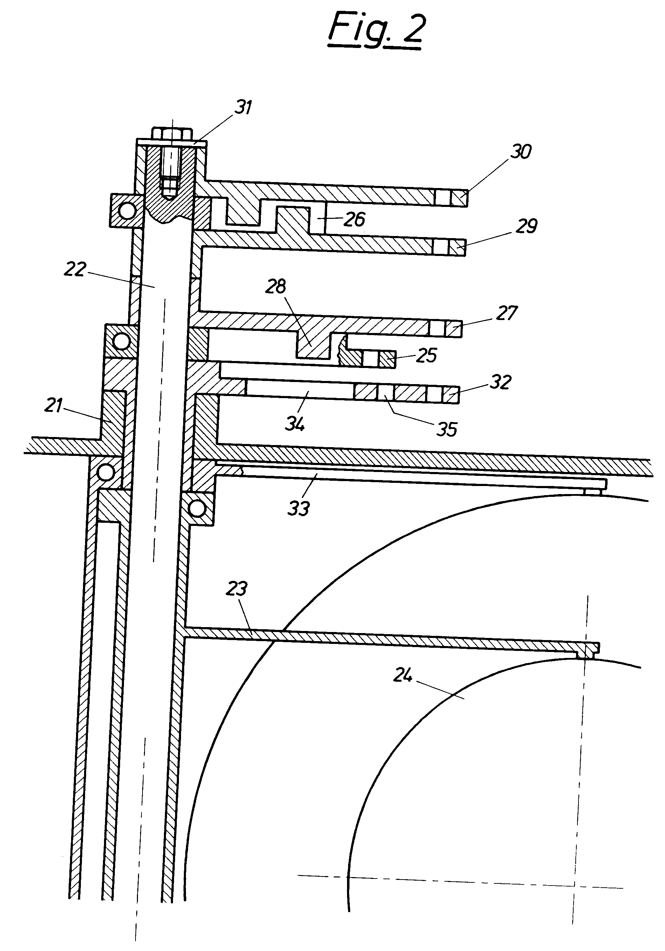

Das in Fig.2 dargestellte einfache Steuergestänge ist im wesentlichen baugleich mit den bekannten Betätigungsvorrichtungen von mechanischen Differentialsperren und unterscheidet sich von diesen nur durch die zusätzliche Anordnung von Schlepphebeln 27, 29 und 30. Das Steuergestänge kann sowohl vertikal als auch horizontal eingebaut sein; es ist dann lediglich die relative Lage der Schaltgabeln 23 und 33 anzupassen.

Durch eine Durchgangsbohrung eines Differentialgehäuses 21 führt eine Schaltwelle 22 von außen in dieses. Sie trägt an ihrem einen Ende eine Schaltgabel 23, die in eine Rille einer Muffe 24 eingreift und ist in ihrem Axialspiel in bekannter Weise durch eine Gegenlagerung begrenzt. Außen auf der Schaltwelle 22 sitzt verdrehfest ein Federhebel 25. Er dient zum Befestigen einer Rückholfeder, die nicht eingezeichnet ist. Weiters befindet sich auf der Schaltwelle 22 ein Schalthebel 26, der ebenfalls verdrehfest fixiert ist. Zusätzlich trägt die Schaltwelle 22 drehbar gelagerte Schlepphebel 27 und 29 und gegebenenfalls einen weiteren Schlepphebel 30. Wird ein solcher vorgesehen, so wird er durch eine angeschraubte Scheibe 31 in Längsrichtung der Schaltwelle 22 geführt.

Der vom Lenkwinkelgeber kommende Bowdenzug 13 greift am Schlepphebel 27 an und bewegt diesen, wenn ein Lenkeinschlag erfolgt. Der Schlepphebel 27 greift mit seinem Mitnehmer 28 am Federhebel 25 an und nimmt diesen mit, wodurch die Schaltwelle 22 und damit die Schaltgabel 23 betätigt wird. Durch diesen Vorgang wird die relative Lage der anderen Schlepphebel 29 und 30 nicht verändert, da ihre Mitnehmer vom Schalthebel 26 abheben und dessen Drehung nicht mitmachen. Das Gleiche gilt auch analog wenn einer der anderen beiden Schlepphebel 29 oder 30 betätigt wird. Die Steuereinrichtung folgt einer negativen Logik, das heißt, daß ein Betätigen eines oder mehrerer Schlepphebel die Schaltgabel 23 bewegt und dadurch die automatische Differentialbremse stufenlos abgeschaltet wird.

Es kann auch ein kombiniertes Steuergestänge verwendet werden. Dieses besteht aus dem eben beschriebenen einfachen Steuergestänge, ergänzt durch einen in Fig.2 dargestellten Lenkrichtungshebel 32, der mit einer weiteren Schaltgabel 33 drehfest verbunden ist und auf der Schaltwelle 22 frei drehbar gelagert ist.

Der Lenkrichtungshebel 32 wird stets mit dem in Fig.1 links unten dargestellten Lenkrichtungsgeber verknüpft. Um sich eine zweite lange Transmission vom Lenkgetriebe zur Treibachse zu ersparen, wird in diesem Fall der Lenkwinkelgeber für das Betätigen des Schlepphebels 27 direkt an den als Teilscheibe ausgebildeten Lenkrichtungshebel 32 am Schlitz 34 angeschlossen. Zusätzlich ist eine Bohrung 35 für eine Rückholfeder vorgesehen.

Es sind einige Betriebszustände denkbar, die ein teilweises oder völliges Abschalten der Differentialbremse erforderlich machen, z.B.:
a) Ein Treibrad ist hochgebockt damit der Fahrer den Reifen wechseln, Schneeketten montieren oder das korrekte Öffnen der Bremsen kontrollieren kann. Dabei ist es nützlich, das Treibrad ungehindert durchdrehen zu können, was eine eingeschaltete Differentialbremse erschweren oder ganz verhindern würde.
b) Nach einem Bremsenservice soll ein Bremsentest erfolgen. Ist die Differentialbremse wirksam, könnte ein "Schiefziehen" der Bremsen eventuell verschleiert werden.
c) Es wird aus Gewichts- und Platzgründen bei einer Zahl von Fahrzeugen anstelle eines normalen Reifens ein Notrad als Reserverad mitgegeben. Diese Noträder sind im Allgemeinen wesentlich kleiner als die Normalräder. Wird ein solches Notrad montiert, dreht es sich deshalb schneller als das Normalrad und es entsteht eine Differenzdrehzahl zwischen den beiden Antriebsrädern, wodurch die Differentialbremse wirksam wird. Dadurch wird das Fahrverhalten beeinträchtigt.

In all diesen Fällen ist es nötig, eine manuelle Abschaltmöglichkeit zu haben. Zu diesem Zweck wird der Schlepphebel 29 über geeignete Zwischenglieder, z.B. einen Bowdenzug, mit einem Bedienungselement am Armaturenbrett verbunden, damit der Fahrer in diesen Sonderfällen die Differentialbremse stufenlos abschalten kann.

Bei Fahrzeugen, die über ein Antiblockierbremssystem verfügen, ist es erforderlich, daß sich beim Bremsen alle Räder frei gegeneinander verdrehen können, da sonst das Antiblockierbremssystem seine Wirkung nicht entfalten kann. Damit dieses jedoch gewährleistet ist, wird ein vom Bremssystem betätigtes Stellglied, z.B. ein Magnet, am Schlepphebel 30 wirksam und setzt dadurch unabhängig von den anderen Steuerungsmechanismen die Differentialbremse außer Betrieb.

Für eine direkte Beeinflussung des Sperrwertes der Differentialsperre durch den Lenkeinschlag werden ein Lenkwinkelgeber gemäß Fig.1 links unten und ein einfaches Steuergestänge am Differentialgehäuse gemäß Fig.2 in Verbindung mit einer Steuermuffe 24 benötigt.

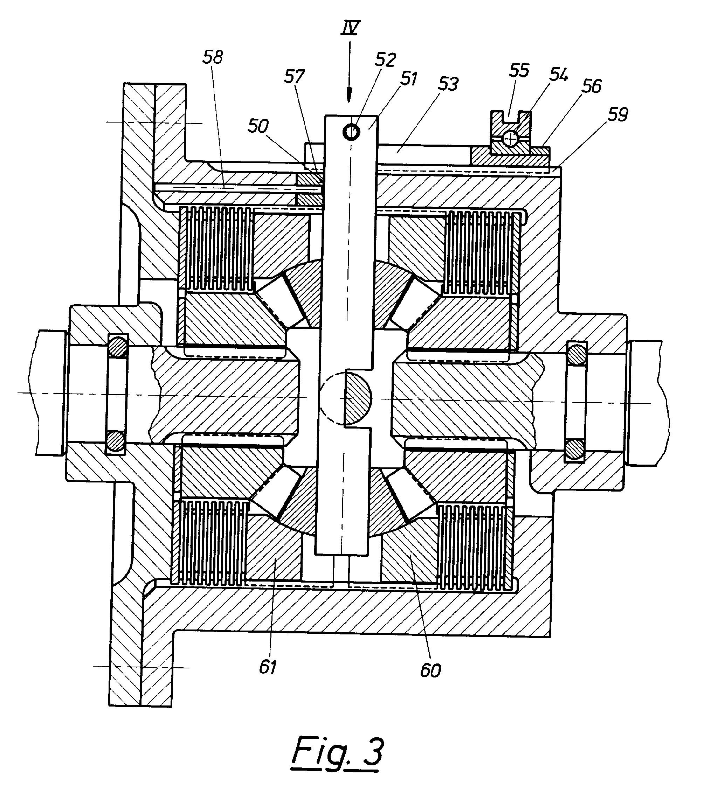

Das in Fig.3 gezeigte bekannte Differential ist zur Bildung der erfindungsgemäßen Differentialsperre mit einer Steuermuffe versehen.

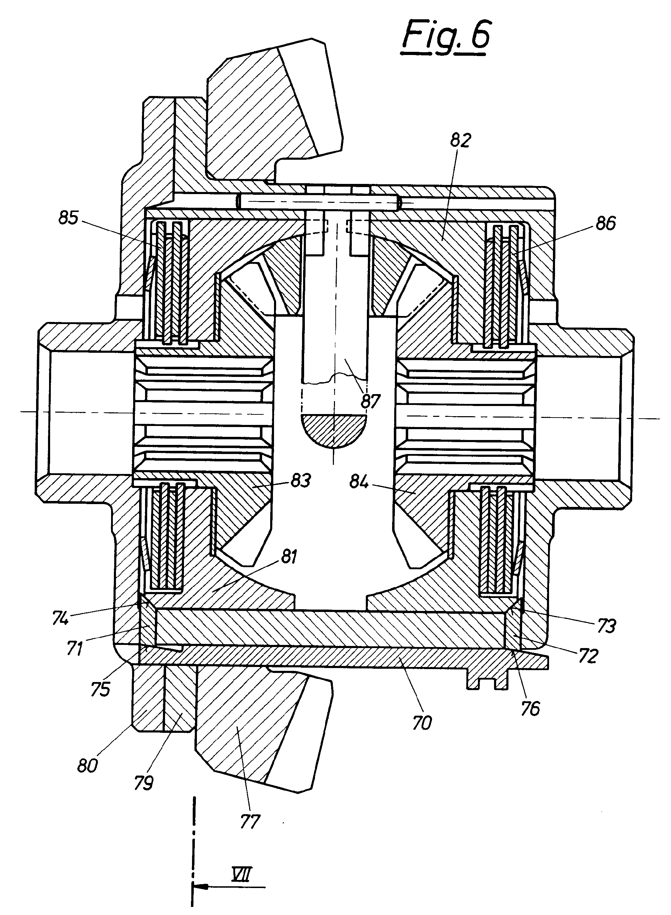

Der Differentialkorb trägt außen ein Keilwellenprofil 59, in der eine Steuermuffe 53 in axialer Richtung verschieblich ist. Zur Verringerung der Reibung kann auf ihr ein geeignetes Wälzlager 54 sitzen, das eine Führungsnut 55 aufweist, in der eine Schaltgabel eines Steuergestänges eingreift. Das Wälzlager 54 wird durch einen Sicherungsring 56 in axialer Richtung fixiert. In den Differentialkorb sind radiale Schlitze 50 gefräst, durch die ein verlängerter Druckringbolzen 51 herausragt. Falls das Differential nur einen Druckringbolzen aufweist, kann dieser über die Steuermuffe 53 hinausragen und durch Stifte 52 in Längsrichtung geführt sein. Die Längsführung kann aber auch durch Federsicherungen innerhalb des Ausgleichskegelritzel in bekannter Weise erfolgen. Trägt der Differentialkorb zwei Druckringbolzen, so müssen zusätzlich an zwei gegenüberliegenden Schlitzen 50 Ausnehmungen 57 gefräst werden, damit auch der zweite Druckringbolzen von außen eingebaut werden kann. Anschließend werden die Ausnehmungen 57 durch passende Metallstücke verschlossen, die durch Stifte 58 gegen das Herausfallen gesichert sind. Sind zwei Druckringbolzen vorgesehen, sichern sich diese in Längsrichtung gegenseitig. Wie aus Fig.4 ersichtlich ist, sind in die Steuermuffe 53 Ausnehmungen gefräst, die analog zu jenen der Druckringe 60, 61 im Inneren des Differentials angeordnet sind. Sie unterscheiden sich von diesen aber durch den großen Flankenwinkel φ, der nahezu 90° beträgt.

Wird ein Drehmoment in den Differentialkorb eingeleitet, so wird es von den Druckringen 60 und 61 über ihre Spreizverbindung gemäß Fig.3 an den Druckringbolzen 51 weitergegeben, der sich mit seinen Ausgleichkegelritzeln gegen die Achskegelräder abstützt. Dabei wird ein Spreizmoment erzeugt, welches die Druckringe 60 und 61 auseinanderdrückt. Dies hat zur Folge, daß der Druckringbolzen relativ zum Differentialkorb entgegen der Drehrichtung desselben bewegt wird. Diese Relativdrehung ist umso großer, je höher das eingeleitete Drehmoment und damit die Spreizung der Druckringe 60,61 ist. Hier setzt die Wirkung der Steuermuffe 53 ein, die mit den schrägen Kanten ihrer Ausnehmungen die Relativdrehung des Druckringbolzens 51 stufenlos begrenzen kann. Ist sie in Fig.3 ganz nach rechts geschoben, kann sich der Druckringbolzen 51 frei verdrehen und die Differentialbremse kann ihre volle Wirkung entfalten. Schiebt man die Steuermuffe 53 jedoch nach links, so begrenzt sie die Relativdrehung des Druckringbolzens 51 und damit seine Spreizwirkung, bis sie schließlich in ihrer linken Endlage den Druckringbolzen 51 fixiert und dieser überhaupt keine Relativdrehung mehr machen kann. In dieser Stellung wird das gesamte eingeleitete Drehmoment vom Differentialkorb über die Steuermuffe 53 an den Druckringbolzen 51 übertragen, eine Spreizwirkung der Druckringe 60 und 61 kommt nicht mehr zustande. Die Wirkung der Differentialbremse ist damit aufgehoben.

Falls die Steuermuffe 53 mit einem der nachfolgend beschriebenen Sollwertregler kombiniert wird, muß der Flankenwinkel φ geringfügig größer als 90° sein, da sonst ein verkehrter Steuersinn entsteht. Außerdem kann das Wälzlager entfallen.

Das in Fig.6 gezeigte bekannte Differential ist zur Bildung der erfindungsgemäßen Differentialsperre an seiner Unterseite mit einer Steuermuffe versehen.

In den Flansch eines Differentialkorbes 79, in den Deckel 80 und in das äußere Kegelrad 77 sind mindestens eine, vorzugsweise zwei oder mehrere gleichmäßig über den Umfang verteilte Ausnehmungen eingearbeitet, in welchen eine Steuermuffe 70 mit ihren fingerförmigen Fortsätzen axial beweglich ist. Im dargestellten Beispiel wurden fünf Ausnehmungen gewählt, die zwischen zur Befestigung des äußeren Kegelrades 77 dienenden Bohrungen 78 angeordnet sind. Die Steuermuffe 70 drückt mit ihren schrägen Steuerkanten 75 und 76 auf beiderseits des Differentials angeordnete Sperrbolzen 71 und 72, welche sich in passend angebrachten Bohrungen sowohl im Differentialkorb 79 als auch im Deckel 80 befinden. Diese Sperrbolzen 71 und 72 bilden mit ihren schrägen Enden 73 und 74 den Anschlag für mit entsprechenden Abschrägungen versehene Druckringe 81 und 82.

Weist der Differentialkorb 79 eine Differenzdrehzahl zu den beiden Achskegelrädern 83 und 84 auf, so üben diese ein Schleppmoment auf die Druckringe 81 bzw. 82 aus, welches die Druckringe auf die Drehzahl der Achskegelräder zu bringen versucht. Die Größe dieses Schleppmomentes ist abhängig vom Reibungsbeiwert der mit den Druckringen 81, 82 verbundenen Lamellenpakete 85 , 86 und ihrer Vorspannung durch zugeordnete Tellerfedern, sowie der Größe der Differenzdrehzahl zwischen den Achskegelrädern 83 bzw. 84 und dem Differentialkorb 79. Übersteigt die Differenzdrehzahl einen durch die Bauteilabmessungen festgelegten Wert, genannt Einschaltdifferenzdrehzahl, so werden die Druckringe 81, 82 durch das Schleppmoment mitgenommen und bewegen sich auf Grund ihrer Spreizverbindung mit einem Druckringbolzen 87 nach außen, wodurch die Tellerfeder zusammengedrückt und ihre Spannung vergrößert wird, wodurch wiederum das Schleppmoment ansteigt. Dieser Vorgang steigert sich so lange, bis das Schleppmoment und die durch die Reibung in der Spreizverbindung entstehende Gegenkraft sich die Waage halten. Das Schleppmoment steht also in direkter Abhängigkeit zur Differenzdrehzahl und kann im Extremfall bei geeigneter Lamellenbestückung 100 % des Eingangsdrehmomentes erreichen. Da sich das Schleppmoment zum Abtriebsdrehmoment dazuaddiert, wird das langsam drehende Rad mit diesem erhöhten Moment getrieben. Dieser Schaltvorgang findet normalerweise innerhalb von Sekundenbruchteilen statt. Hier setzt nun die Wirkung der Steuermuffe 70 ein. Wenn das Fahrzeug geradeaus fährt, wird die Steuermuffe in ihrer linken Endstellung gehalten, die Sperrbolzen 71, 72 können radial nach außen treten und geben die Druckringe 81 bzw. 82 frei, so daß diese ihre Funktion erfüllen können. Bei einer Kurvenfahrt drückt die Schaltgabel die Steuermuffe 70 nach rechts, wodurch sie mit ihren Steuerkanten 75 und 76 die Sperrbolzen nach innen schiebt. Diese begrenzen mit ihren schrägen Flächen 73, 74 den Spreizweg der Druckringe 81 und 82, sodaß die Tellerfedern nur noch teilweise zusammengedrückt werden können und das Schleppmoment der Lamellenpakete 85 , 86 auch bei großer Differenzdrehzahl begrenzt bleibt. Ist die Kurve sehr eng, so wird die Steuermuffe 70 in Fig.6 ganz nach rechts bewegt und dadurch die Sperrbolzen 71,72 ganz nach innen gedrückt, sodaß sich die Druckringe 81,82 überhaupt nicht mehr auseinanderspreizen können. Da nun nur noch die kleine Vorspannkraft der Tellerfedern auf die Lamellenpakete 85, 86 einwirkt, bleibt nur noch ein geringes Restschleppmoment erhalten. Die selbstsperrende Wirkung der Differentialbremse ist damit aufgehoben. Zur Verringerung von Reibung und Verschleiß kann zwischen der Schaltgabel und der Steuermuffe 70 ein geeignetes Wälzlager angeordnet werden.

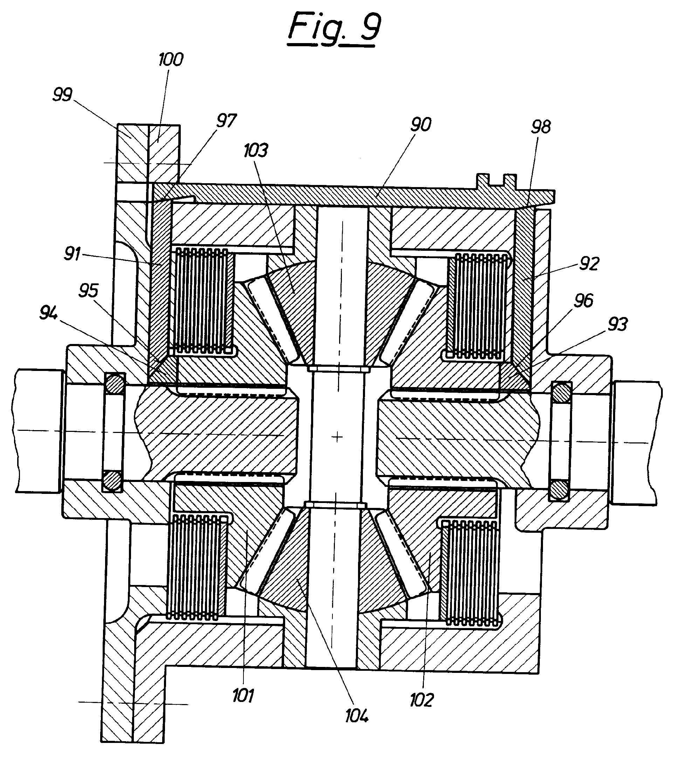

Das in Fig.9 gezeigte bekannte Differential ist zur Bildung der erfindungsgemäßen Differentialsperre an seiner Oberseite mit einer Steuermuffe 90 versehen.

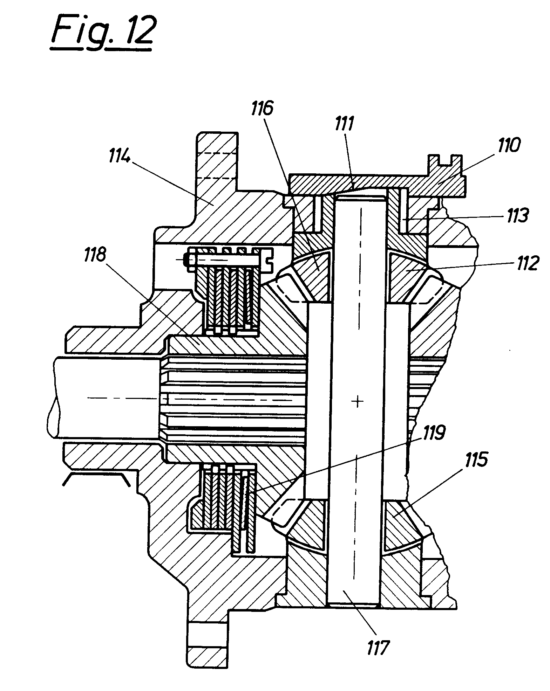

In den Flansch eines Differentialkorbes 100, in den Deckel 99 und in das nicht eingezeichnete äußere Kegelrad sind mindstens eine, vorzugsweise zwei oder mehrere, gleichmäßig über den Umfang verteilte Ausnehmungen eingearbeitet, in welchen eine Steuermuffe 90 mit ihren fingerförmigen Fortsätzen axial beweglich ist. Beim dargestellten Beispiel wurden fünf Ausnehmungen gewählt. Die Steuermuffe 90 drückt mit ihren schrägen Steuerkanten 97, 98 auf beiderseits des Differentials angeordnete Sperrbolzen 91 und 92, welche in entsprechend angebrachten Bohrungen sowohl im Differentialkorb 100, als auch im Deckel 99 angeordnet sind. Diese Sperrbolzen 91, 92 liegen mit ihren schrägen Enden 95, 96 an den Gegenringen 93 und 94 (siehe auch die Fig.10 und 11) an und bilden mit diesen Anschläge für die Achskegelräder 101 und 102. Die Gegenringe 93, 94 weisen außerdem Nasen auf, die in entsprechende Nuten im Differentialkorb 100 und im Deckel 99 eingreifen und dafür sorgen, daß sie mit diesem verdrehfest aber axial verschieblich verbunden sind.

Wird ein Drehmoment in den Differentialkorb 100 eingeleitet, so dreht er sich und nimmt dabei den Druckringbolzen und die darauf befindlichen Ausgleichskegelritzel 103 und 104 mit, die sich gegen die Achskegelräder 101 und 102 abstützen. Durch die schräge Zahnform entsteht dabei ein Spreizeffekt, der die Achskegelräder auseinanderdrückt, wodurch diese die auf ihnen sitzenden Lamellenpakete zusammendrücken und ein Schleppmoment bewirken. Hier setzt nun die Wirkung der Steuermuffe 90 ein. Wenn das Fahrzeug geradeaus fährt, so wird die Steuermuffe in ihrer in Fig.9 linken Endstellung gehalten, die Sperrbolzen 91, 92 können radial nach außen treten und geben Gegenringe 93, 94 frei, sodaß die Achskegelräder sich auseinanderspreizen können und die Differentialbremse wirksam wird, Bei Kurvenfahrt drückt die Schaltgabel die Steuermuffe 90 nach rechts, wodurch sie mit ihren Steuerkanten 97, 98 die Sperrbolzen nach innen schiebt. Diese begrenzen mit ihren schrägen Flächen 95, 96 den Spreizweg der Gegenringe 93, 94 und der mit diesen in Kontakt stehenden Achskegelräder 101 und 102. Dadurch werden die Lamellenpakete weniger stark zusammengedrückt und erzielen ein verringertes Schleppmoment. Ist der Lenkeinschlag wegen einer ganz engen Kurve sehr groß, so wird die Steuermuffe 90 ganz nach rechts bewegt und es werden damit die Sperrbolzen 91, 92 ganz nach innen gedrückt. Nun wird von den Gegenrippen 93,94 die gesamte Spreizkraft der Achskegelräder 101, 102 aufgenommen und deren Spreizung völlig verhindert. Daher bleiben die Lamellenpakete unbelastet und es wird von ihnen kein Schleppmoment mehr erzeugt. Die Wirkung der Differentialbremse ist damit aufgehoben. Zur Verringerung von Reibung und Verschleiß kann zwischen der Schaltgabel und der Steuermuffe 90 ein geeignetes Wälzlager vorgesehen werden.

Das in Fig.12 gezeigte bekannte Differential ist zur Bildung der erfindungsgemäßen Differentialsperre an seiner Oberseite mit einer Steuermuffe versehen.

Auf einem Differentialkorb 114 ist in Axialrichtung verschiebbar eine Steuermuffe 110 angeordnet. Sie drückt mit einer schrägen Steuerkante 111 auf eine entsprechende Abschrägung von Druckstempeln 112, die sich gegen Ausgleichkegelritzel 115,116 stützen. Die Druckstempel 112 werden durch ein Keilwellenprofil 113 im Differentialkorb 114 drehfest geführt.

Wird ein Drehmoment in den Differentialkorn eingeleitet, so dreht er sich und nimmt dabei einen Druckringbolzen 117 und die darauf befindlichen Ausgleichskegelritzel 115,116 mit, die sich gegen Achskegelräder 118 abstützen. Durch die schräge Zahnform entsteht ein Spreizeffekt, der die Achskegelräder 118 auseinanderdrückt und dabei die Gegenkraft von Federn 119 überwindet, wodurch die Anpreßkraft dieser Federn auf die Lamellenpakete und damit deren Schleppmoment verringert wird. Das bedeutet, je größer das eingeleitete Drehmoment ist, desto kleiner wird der Sperrwert. Hier setzt nun die Funktion der Steuermuffe 110 ein. Wenn das Fahrzeug geradeaus fährt, so wird die Steuermuffe in ihrer in Fig.12 linken Endstellung gehalten und die Druckstempel 112 und mit ihnen die Ausgleichskegelritzel 115,116 können radial nach außen treten, wodurch eine normale Funktion der Differentialbremse gegeben ist. Fährt man eine Kurve und läßt dabei das Fahrzeug antriebslos rollen, so wird das eingeleitete Drehmoment zu Null und damit kein Spreizeffekt auftreten, sodaß die Differentialbremse in unerwünschter Weise ihren vollen Sperrwert erreichen würde. Da jedoch durch die Lenkbewegung die Steuermuffe 110 nach rechts geschoben wird, drückt sie mit ihrer schrägen Steuerkante 111 die Druckstempel 112 und die mit diesen in Kontakt stehenden Ausgleichskegelritzel 115,116 ein Stück nach innen, wodurch die Achskegelräder 118 gespreizt und der Sperrwert verringert wird. Ist die Kurve sehr eng, so wird die Steuermuffe 110 ganz nach rechts gezogen und die Druckstempel 112 und mit ihnen die Ausgleichskegelritzel 115,116 werden ganz nach innen gedrückt, wodurch eine volle Spreizung der Achskegelräder 118 erfolgt und die Lamellenpakete vollständig entlastet werden, so daß sie kein Schleppmoment mehr erzeugen. Die Wirkung der Differentialbremse ist damit aufgehoben. Auch an dieser Steuermuffe 110 kann zur Verringerung von Reibung und Verschleiß ein geeignetes Wälzlager zwischen ihr und der Schaltgabel vorgesehen werden.

Die Funktion der Steuermuffe 90 gemäß Fig.9 kann mit der Funktion der Steuermuffe 110 gemäß Fig.12 kombiniert werden. Bei einer solchen kombinierten Steuermuffe muß die Steuerkante 111 verkehrt angeordnet werden, wenn sie auf einer Differentialbremse gemäß Fig.9 verwendet wird, bzw. es müssen die Steuerkanten 37, 98 umgekehrt werden, wenn die kombinierte Steuermuffe auf einer Differentialbremse gemäß Fig.12 eingesetzt werden soll. Auch die kombinierte Steuermuffe schaltet die Differentialbremse ein, wenn sie nach links bewegt wird bzw. aus, wenn man sie nach rechts drückt. Ihr Verhalten unterscheidet sich von den Ausführungen nach den Fig. 9 und 12 dadurch, daß die Größe des in den Differentialkorb eingeleiteten Drehmomentes praktisch keinen Einfluß auf den Sperrwert hat. Dieser ist bei der Ausführungsform nach Fig.9 ausschließlich durch die von der Kraft der Rückholfeder am Steuergestänge auf die Steuermuffe ausgeübte Rückstellkraft bestimmt und bei der Ausführungsform nach Fig.12 noch zusätzlich durch die Vorspannkraft der Federn an den Lamellenpaketen.

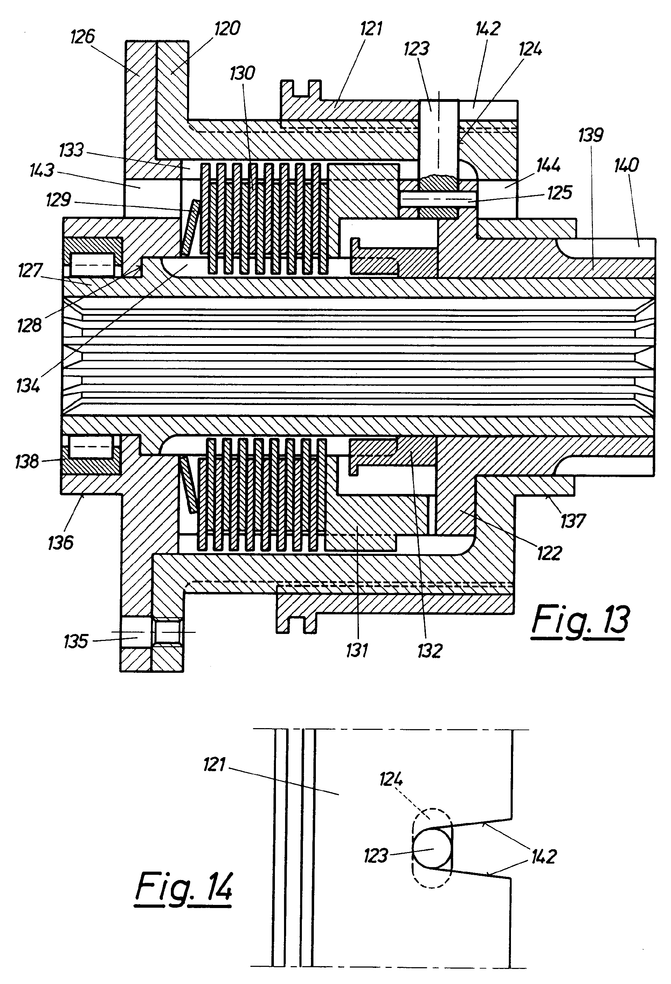

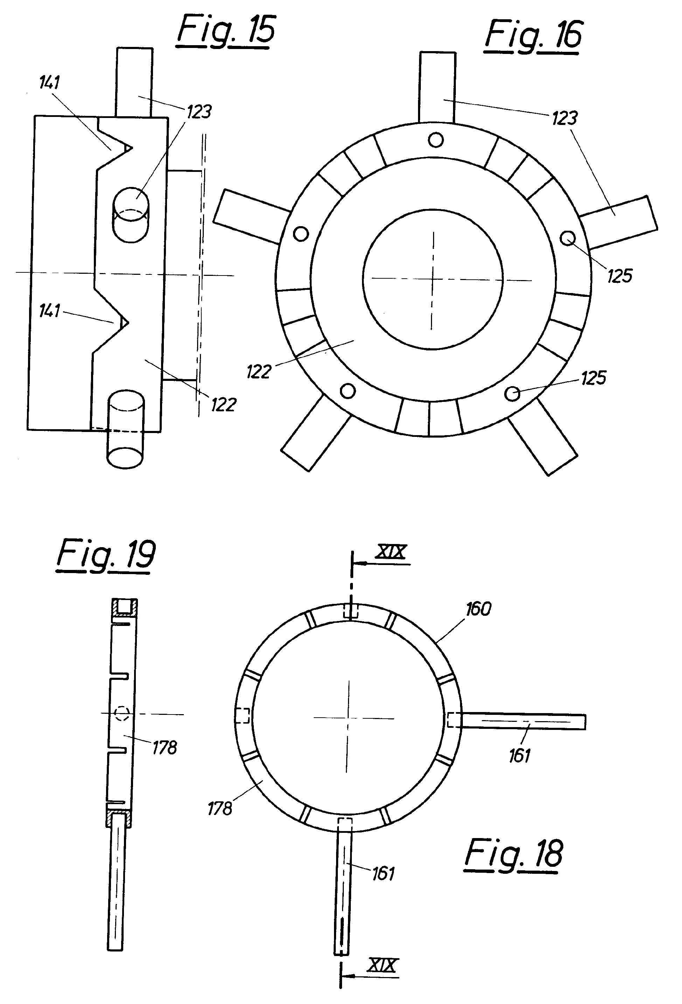

Eine Selbstsperrlamellenkupplung, welche bei Stirnradplanetendifferentialen, die bei ungleicher Drehmomentaufteilung verwendet werden, als Differentialbremse eingesetzt werden kann, ist in den Fig.13 bis 16 dargestellt. Diese Selbstsperrlamellenkupplung kann auch zur Verbindung von Antriebswellen bei zuschaltbaren oder permanenten Allradantrieben anstelle der bekannten Visco-Kupplung eingesetzt werden. Fig. 14 zeigt einen Ansichtausschnitt einer Steuermuffe 121 und die Fig.15 und 16 zeigen die Spreizverbindung zwischen einem Festdruckring 131 und einem Losdruckring 122, bei der das Keilwellenprofil aus Übersichtsgründen nicht eingezeichnet wurde. Der Losdruckring 122 trägt mindestens einen, vorzugsweise zwei oder mehrere, gleichmäßig über den Umfang verteilte Sperrbolzen 123. Beim dargestellten Beispiel wurden fünf gewählt.

Beim Zusammenbau dieser Selbstsperrlamellenkupplung wird zunächst die Steuermuffe 121 auf das Keilwellenprofil eines Trägers 120 aufgeschoben und festgehalten. Dann setzt man den Losdruckring 122 in den Boden des Trägers 120 so ein, daß die Sperrbolzen 123 durch Schlitze 124 des Trägers 120 in die entsprechenden Bohrungen des Losdruckringes 122 eingesetzt und durch Stifte 125 gesichert werden können. Nun nimmt man einen Deckel 126 und führt ein Zentralrohr 127 bis zum Anschlag 128 in diesem. Sodann werden eine Tellerfeder 129 und ein Lamellenpaket 130 auf das Keilwellenprofil 134 aufgeschoben, darauf folgen ein Festdruckring 131 und ein Distanzring 132. Danach werden die Außenlamellen des Lamellenpaketes 130 und der Festdruckring 131 ausgerichtet, sodaß ihre Zahnung mit der des Keilwellenprofils 133 an der Innenseite des Trägers 120 fluchtet, und in einem Zug in den Träger 120 eingeführt. Jetzt braucht nur noch ein Deckel 126 mit dem Träger 120 mittels Schrauben durch Bohrungen 135 verschraubt zu werden und die Selbstsperrlamellenkupplung ist einbaufertig zusammengebaut. Um sie in einem Gehäuse bequem lagern zu können, sind am Deckel 126 und am Träger 120 Lagerflansche 136, 137 angeordnet. Um im entkuppelten Zustand den Verschleiß zu verringern, können ein Wälzlager 138 vorgesehen sein, sowie Axiallagerscheiben am Anschlag 128 und zwischen dem Losdruckring 122 und dem Boden des Trägers 120. Zwischen dem Distanzring 132 und dem Losdruckring 122 kann auch eine Axiallagerscheibe angeordnet sein und zusätzlich kann an dieser Stelle auch eine weiche Tellerfeder eingebaut werden, um das Axialspiel eines Zentralrohres 127 zu dämpfen. Im Deckel 126 und im Boden des Trägers 120 sind mehrere Bohrungen 143, 144 vorgesehen, durch welche Öl in das Innere des Trägers treten kann.

Der Antrieb erfolgt durch einen rohrförmigen Flansch 139 des Losdruckringes 122, der ein Keilwellenprofil 140 trägt. Oer Abtrieb erfolgt über das Zentralrohr 127, welches auf der Innenseite ebenfalls ein Keilwellenprofil aufweist. Dadurch kann der Abtrieb an jeder der beiden Kupplungsseiten erfolgen. Das wird nötig, wenn diese Selbstsperrlamellenkupplung als Differentialbremse für Stirnradplanetendifferentiale eingesetzt wird oder die Antriebsenergie für eine Nebenwelle von einer durchlaufenden Hauptwelle entnommen werden soll. Ihre Funktion ist sowohl unabhängig von der Drehrichtung als auch von der Drehmomentrichtung, sodaß Antrieb und Abtrieb umkehrbar sind. Sowohl bei Drehrichtungs- als auch Drehmomentumkehr tritt jedoch während der Umkehr ein kurzzeitiges Entkuppeln auf.

Wird der Flansch 139 angetrieben, so versucht der Losdruckring 122 den Festdruckring 131 an dessen Spreiznasen 141 und damit auch den Träger 120 und die mit diesem verbundenen Außenlamellen des Lamellenpaketes 130 mitzudrehen. Besteht nun eine bestimmte Differenzdrehzahl zum Zentralrohr 127 und den mit diesem verbundenen Innenlamellen (Einschaltdifferenzdrehzahl), so wird der Träger durch die Reibung im Lamellenpaket 130, welches durch die Vorspannkraft der Tellerfeder 129 ganz leicht zusammengedrückt wird, am Mitdrehen gehindert, falls sich die Steuermuffe 121 in Fig.13 links befindet und daher die Sperrbolzen 123 freigibt. Es wird sich somit der Losdruckring 122 relativ zum Träger 120 verdrehen und dabei die Spreiznasen 141 den Festdruckring 131 gegen das Lamellenpaket 130 drücken, wodurch die Reibung im Lamellenpaket 130 anwächst und damit das Schleppmoment, welches das Zentralrohr 127 anzutreiben versucht. Dadurch verdreht sich der Losdruckring 122 noch stärker und der Zyklus wiederholt sich, bis sich das Zentralrohr mitdreht. Diese Schaltvorgänge laufen in Sekundenschnelle ab. Hier setzt nun die Wirkung der Steuermuffe 121 ein. Sie begrenzt durch ihre schrägen Steuerkanten 142 die Größe der relativen Verdrehung der Sperrbolzen 123 und des mit diesen verbundenen Losdruckringes 122 und damit die Größe des Schleppmomentes. Wird sie ganz nach rechts gedrückt, so hält sie die Sperrbolzen 123 fest und es kommt überhaupt keine Spreizung mehr zustande und die Selbstsperrwirkung der Kupplung ist aufgehoben. Es ist nun nur noch ein geringes, durch die Vorspannkraft der Tellerfeder 129 bewirktes Restschleppmoment wirksam. Auch hier kann zur Verringerung von Verschleiß und Reibung zwischen der Schaltgabel und der Steuermuffe 121 ein geeignetes Wälzlager angeordnet werden.

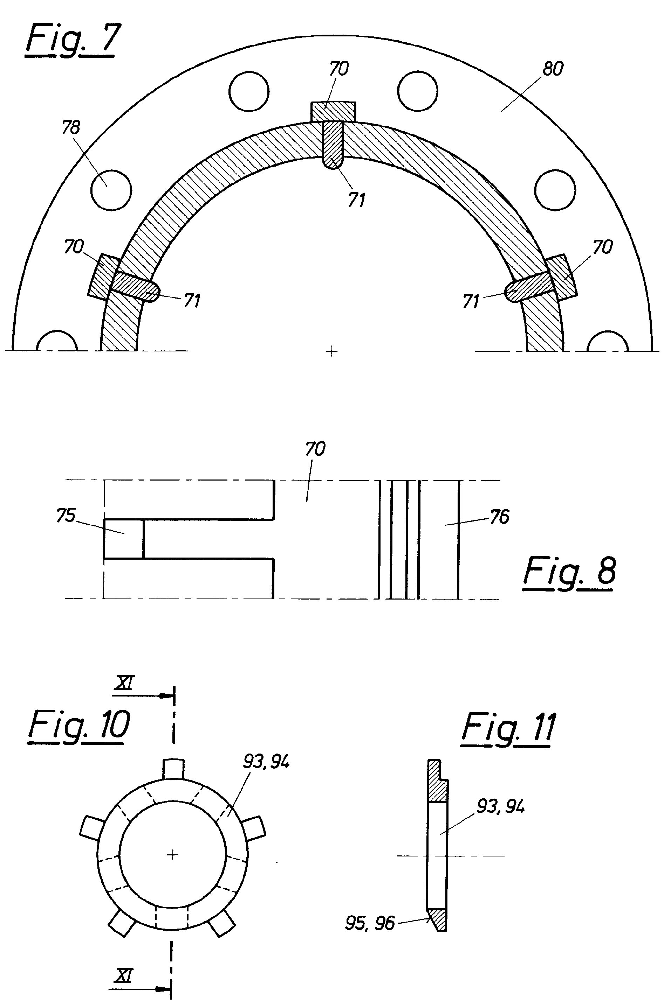

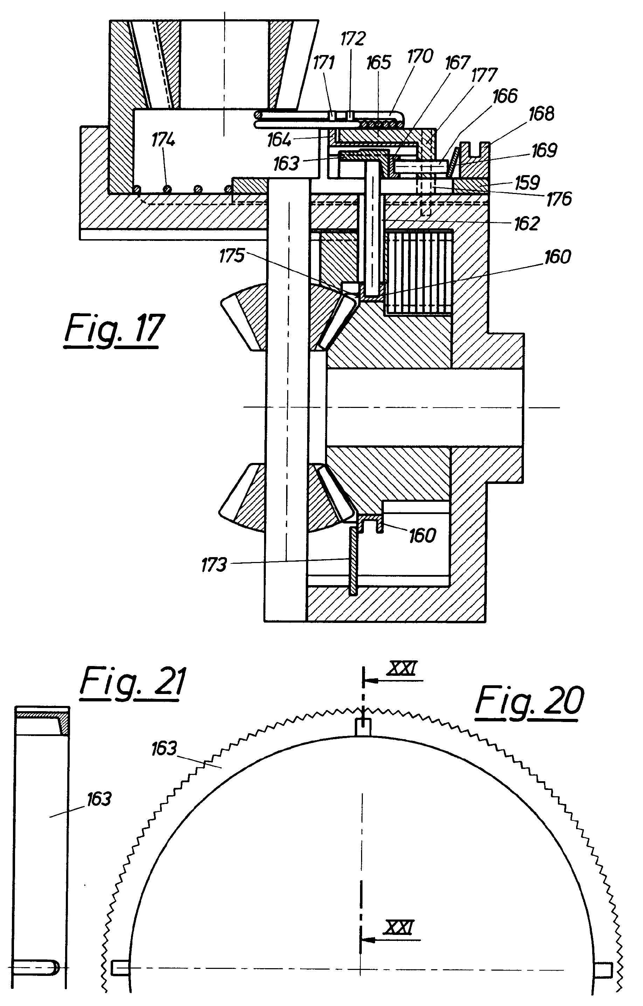

Für eine indirekte Beeinflussung des Sperrwertes durch Veränderung der Einschaltdifferenzdrehzahl durch den Lenkeinschlag werden ein Lenkwinkelgeber, ein einfaches Steuergestänge und eine der Differentialbremsen oder eine Selbstsperrlamellenkupplung mit Steuermuffe gemäß den Fig.3 bis 16 in Verbindung mit einem einfachen Sollwertregler benötigt. Ein solcher wird im folgenden in Verbindung mit den Fig. 17 bis 21 beschrieben.

Fig. 17 zeigt die obere Hälfte eines einfachen Sollwertreglers im Längsschnitt und ein Achskegelrad mit oder ohne Kragen. Bei Differentialen, bei denen die Achskegelräder in Axialrichtung fixiert sind, sitzt der Tachoring 160 auf einem der Achskegelräder und stützt sich gegen dessen Kragen 175. Die Ausbildung des Tachoringes kann den Fig. 18 und 19 entnommen werden. Bei Differentialen, bei denen die Achskegelräder für die Spreizbewegung verwendet werden, stützt sich der Tachoring gegen einen Anschlag 173. Bei der Selbstsperrlamellenkupplung nach Fig. 12 sitzt der Tachoring 160 auf einem Distanzring 132. Es sind mindestens ein, vorzugsweise zwei oder mehrere, gleichmäßig über den Umfang verteilte Tacho- bzw. Schaltbolzen 161 vorzusehen. Beim dargestellten Beispiel sind je vier gewählt.

Beim Zusammenbau des Differentials werden der Tachoring 160 und falls nötig, der Anschlag mit eingebaut. Nun dreht man das Differential bis die Bohrungen des Tachoringes 160 mit den dazugehörigen Bohrungen 162 in den, den Tachoring 160 umgebenden Bauteilen fluchten. Sodann werden die Tachobolzen 161 eingeführt und ein Übertrager 163 mit dem darauf befindlichen Schaltring 164 aufgeschoben. Die Ausbildung des Übertragers 163 ist aus den Fig. 20 und 21 ersichtlich. Danach werden Schaltbolzen 166 in einen Festring 165 eingeführt und ein Gleitring 167 auf diese aufgesteckt, zusammen auf eine Steuermuffe 159 aufgeschoben und mit Abstandshaltern 176 mittels Schrauben 177 mit dem Differentialgehäuse verschraubt. Dann wird eine Schaltfeder 170 auf den Festring 165 gegeben und durch Mitnehmer 171, 172 fixiert. Sodann wird eine Tellerfeder 169 aufgesetzt, gefolgt von einer Schaltmuffe 168, womit der Zusammenbau beendet ist.

Fährt man geradeaus, so drückt eine Rückholfeder 174 am Steuergestänge die Schaltgabel mit der Schaltmuffe 168 nach links gegen die Tellerfeder 169 und damit über die Schaltbolzen 166 und den Gleitring 167 auf den Übertrager 163. Dieser übt nun über die Tachobolzen 161 ein Biegemoment auf den Tachoring 160 aus, da dieser der Bewegung nach links nicht folgen kann, weil er durch den Kragen 175 des Achskegelrades oder den Anschlag 173 daran gehindert wird. Unter dem Einfluß dieses Biegemomentes verformt sich der Tachoring 160 elastisch und preßt seine Lippen 178 gegen das ihn tragende Achskegelrad und hat dadurch eine erhöhte Reibung bzw. ein Schleppmoment gegen dieses. Das hat zur Folge, daß er bereits bei Auftreten einer kleinen Differenzdrehzahl zwischen Achskegelrad und Differentialkorb ein Stück mit dem Achskegelrad mitgedreht wird und dabei die Gegenkraft der Schaltfeder 170 überwindend den übertrager 163 und den mit einem Keilwellenprofil auf diesem sitzenden Schaltring 164 mitnimmt. Der Schaltring 164 steht mit dem Festring 165 durch Spreiznasen in einer Spreizverbindung, welche die relative Verdrehung des Schaltringes 164 in eine axiale Verschiebung desselben verwandeln, wobei der Schaltring die Steuermuffe 159 gegen den Widerstand der Rückholfeder 174 nach links schiebt und dadurch die Differentialbremse aktiviert. Sobald die Differenzdrehzahl unter die Einschaltdifferenzdrehzahl sinkt, schalten die Rückholfeder 174 und die Schaltfeder 170 die Differentialbremse wieder aus. Bei Kurvenfahrt wird die Schaltmuffe 168 etwas in Fig. 17 nach rechts gezogen, die Vorspannung der Tellerfeder 169 auf die Schaltbolzen 166 und den Übertrager 163 wird dadurch verringert. Das hat zur Folge, daß sich der Tachoring 160 weniger stark an das Achskegelrad anpreßt und daher eine höhere Differenzdrehzahl erforderlich wird, um den Tachoring gegen den Widerstand der Schaltfeder 170 mitzudrehen und die Differentialbremse einzuschalten. Fährt man eine sehr enge Kurve, so zieht die Schaltgabel die Schaltmuffe 168 so weit nach rechts, daß die Tellerfeder 169 überhaupt keinen Druck mehr auf den Tachoring 160 ausübt. Jetzt kann auch eine sehr hohe Differenzdrehzahl zwischen dem Differentialgehäuse und dem Achskegelrad kein Einschalten der Differentialbremse mehr bewirken, ihre Funktion ist damit aufgehoben.

Die Tellerfeder 169 hat die Aufgabe, einerseits den Schaltweg der Schaltmuffe 168 in eine Schaltkraft zu verwandeln, andererseits die Bauteiltoleranzen und die durch Verschleiß bedingte Abnutzung des Tachoringes 160 auszugleichen. Die Schaltfeder 170 ist mit der Rückholfeder 174 für die Charakteristik des Sollwertreglers von Bedeutung. Diese Federn sollten so gewählt werden, daß die Differentialbremse erst dann anspricht. wenn die Differenzdrehzahl ihren Sollwert um 5 - 10 % überschreitet, um zu verhindern, daß sie sich bereits wegen ungleicher Reifenabnützung einschaltet. Der volle Schaltweg sollte bei einer Überschreitung von etwa 25 - 50 % erreicht werden. Als Sollwert gilt dabei die Differenzdrehzahl, die bei Kurvengrenzgeschwindigkeit beim jeweiligen Lenkeinschlag erreicht werden kann. Die Kurvengrenzgeschwindigkeit ist jene Geschwindigkeit, mit der das Fahrzeug die Kurve bei günstigster Bodenhaftung durchfahren könnte, ohne hinausgeschleudert zu werden. Dieser Sollwert ist von der Fahrzeugabmessung abhängig und in der Regel bei vollem Lenkeinschlag am größten. Fährt man also langsamer und dreht dabei ein Rad durch, muß man soviel Gas geben, bis die Differenzdrehzahl jenen zugehörigen Sollwert erreicht bzw. überschreitet, um die Differentialbremse zu aktivieren. Das Ansprechverhalten ist dabei unsymmetrisch. Wenn das kurvenäußere Rad durchdreht, spricht die Differentialbremse sofort an, weil die Differenzdrehzahl zwischen kurveninnerem Rad und Differentialkorb ansteigt. Dreht jedoch das kurveninnere Rad durch, so wird die Differenzdrehzahl zuerst immer kleiner, bis der Wert Null erreicht wird, wenn Achskegelrad und Differentialkorb sich gleich schnell drehen, um nun mit umgekehrtem Drehsinn wieder anzuwachsen, bis sich das kurveninnere Rad um jenes Maß schneller als der Differentialkorb dreht, um den es sich langsamer drehen müßte. Erst wenn dieser Wert überschritten wird, schaltet der Sollwertregler ein. Diese Eigenschaft ist unabhängig von Lenkrichtung und Drehrichtung, wirkt also auch bei deren Umkehr.

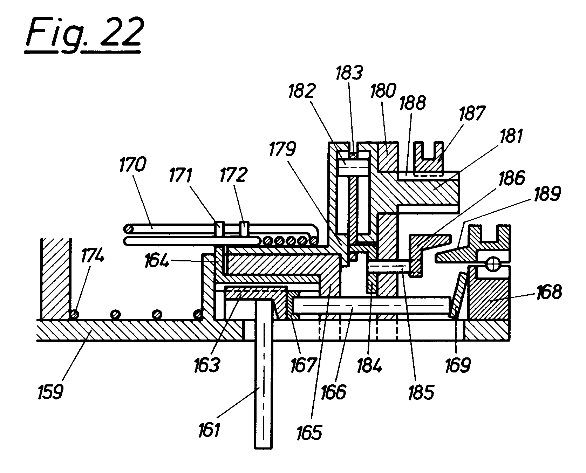

Für eine indirekte Beeinflussung des Sperrwertes durch Veränderung der Einschaltdifferenzdrehzahl durch Lenkeinschlag, Absolutdrehzahl und Lenkrichtung werden ein Lenkrichtungsgeber, ein kombiniertes Steuergestänge und eine der Differentialbremsen oder eine Selbstsperrlamellenkupplung mit Steuermuffe gemäß den Fig.3 bis 16 in Verbindung mit einem kombinierten Sollwertregler benötigt. Ein solcher wird im folgenden in Verbindung mit Fig.22 beschrieben.

Der in Fig. 22 dargestellte kombinierte Sollwertregler besteht aus einem einfachen Sollwertregler gemäß den Fig. 17 bis 21, der durch einige Bauteile erweitert wurde. So sitzt die Schaltfeder 170 auf einem Schaltfederring 179, dem zwei um 180° versetzte Kulissen 181 gegenüberstehen, die von einem Tragring 180 gehalten werden. Kulissen 181 sind mit dem Schaltfederring 179 durch Stellbolzen 182, die in Nuten radial gleiten können, verbunden. Außerdem haben die Kulissen 181 an ihren Bolzenenden eine Schraubenverzahnung 188, auf der eine Lenkmuffe 187 axial verschieblich sitzt. Die radiale Verschiebung von Stellbolzen 182 wird durch Kurbeln 184 und Pleuel 183 vorgenommen, die ihrerseits durch Exzenterwellen 185 und einem auf den Exzentern sitzenden Drehzahlring 186, der mit seiner Innenseite gegen einen Konus 189 des stillstehenden Außenteiles der Schaltmuffe 168 stößt, gesteuert sind.

Fährt man geradeaus, so wird die Schaltmuffe 168 ganz nach links gedrückt sein und daher die Tellerfeder 169 über die Schaltbolzen 166 und den Gleitring 167 eine große Kraft auf den Übertrager 163, die Tachobolzen und damit auf den Tachoring ausüben, sodaß bei Auftreten einer Differenzdrehzahl der Übertrager den Schaltring 164 betätigt und die Steuermuffe 159 die Differentialbremse einschaltet. Dies wird auch durch die Lenkmuffe 187 nicht beeinflußt, die bei Geradeausfahrt in Mittelstellung ist und daher die Nuten der Kulissen 181 genau senkrecht stellt, sodaß der Stellbolzen 182 kein Verdrehen des Schaltfederringes 179 bewirkt, selbst wenn durch hohe Drehzahl der Drehzahlring 186 vom Konus 189 abhebt, und sich aufweitend die Exzenter der Exzenterwelle 185 nach außen drückt, wobei der Stellbolzen 182 durch die Kurbel 184 und das Pleuel 183 in Abhängigkeit von der Drehrichtung in die innere oder äußere Totpunktlage gebracht wird. Fahrt man z.B. eine Rechtskurve vorwärts, so wird die Schaltmuffe 168 ein Stück in Fig.22 nach rechts gedrückt, der Anpreßdruck der Tellerfeder verringert sich und daher muß die Differenzdrehzahl anwachsen, um die Steuermuffe aktivieren zu können. Gleichzeitig aber wird auch die Lenkmuffe 187 nach rechts bewegt und dadurch die Kulissen 181 an der Außenseite entgegen der Drehrichtung des Differentialkorbes geschwenkt. Weil der Drehzahlring 186 am stillstehenden Konus 189 anliegt und reibt, wird er ebenfalls entgegen der Drehrichtung des Differentialkorbes, die Exzenter betätigend, ein Stück mitgenommen, wodurch die Kurbel 184 das Pleuel 183 mit den Stellbolzen 182 aus seiner Mittellage nach innen zieht, und zwar umso weiter, je schneller man fährt. Bei kleinen Drehzahlen übernimmt die Reibung des in der Mitte geschlitzten und federnden Drehzahlringes 186 am Konus 189 die Messung der Absolutdrehzahl, bei höheren Drehzahlen wird der Drehzahlring 186 durch die Fliehkraft vom Konus 189 abgehoben und nur durch diese verlustarm betätigt. Die Fliehkraft von Stellbolzen 182 und Pleuel 183 werden durch ein Gegengewicht an der Kurbel 184 ausgeglichen. Der Stellbolzen 182 kommt durch das nach innen Ziehen in den Teil der Nut der Kulissen 181, die in Drehrichtung geschwenkt sind und dreht dabei den Schaltfederring 179 mit. Daher wird die Schaltfeder 170 in Abhängigkeit vom lenkeinschlag und der Fahrgeschwindigkeit in Drehrichtung vorgespannt. Es halten sich nun die am Übertrager 163 anliegende Kraft des Tachoringes und die Gegenkraft der Schaltfeder 170 die Waage. Dreht sich das rechte Rad zu langsam, steigt die Differenzdrehzahl, und es überwiegt die Kraft des Tachoringes; der Schaltring 164 wird gegen die Drehrichtung des Differentialkorbes mitgenommen und schaltet durch die Steuermuffe 159 die Differentialbremse ein. Dreht es sich zu schnell, weil es durchrutscht, so fällt die Differenzdrehzahl und es überwiegt die Gegenkraft der vorgespannten Schaltfeder, der Schaltring 164 wird mit der Drehrichtung des Differentialkorbes mitgenommen und aktiviert die Differentialbremse. Durch die Anordnung von Kulissen 181, Kurbel 184 und Pleuel 183 mit der Exzenterwelle 185 und Drehzahlring 186 sowie Lenkmuffe 187 wird sichergestellt, daß die Schaltfeder 170 unabhängig von Fahrtrichtung, Lenkrichtung und Geschwindigkeit stets um das richtige Maß in der richtigen Richtung vorgespannt wird. Sollte die Kurve sehr eng sein, so rückt die Schaltmuffe 168 ganz in Fig. 22 nach rechts und hebt dadurch die Wirkung des Sollwertreglers auf, die Differentialbremse bleibt abgeschalten.

## Patentansprüche

1. Sperre für ein Differentialgetriebe für Kraftfahrzeuge, mit einer im Differentialgetriebe oder in einem mit einer Welle desselben in Antriebsverbindung stehenden Teil, beispielsweise einer Sperrlamellenkupplung (85,130) vorgesehenen Sperreinrichtung, wobei mechanisch wirkende Mittel (141) vorgesehen sind, die bei Auftreten einer Drehzahldifferenz bzw. einer Drehmomentdifferenz zwischen wenigstens zwei Ausgangswellen und/oder zwischen der Eingangswelle und wenigstens einer Ausgangswelle des Differentialgetriebes bzw. des damit in Antriebsverbindung stehenden Teiles, sowie in Abhängigkeit von der Lenkbewegung (3) des Kraftfahrzeuges die Sperreinrichtung stufenlos betätigen und dadurch die Differentialwirkung zumindest teilweise aufheben, **dadurch gekennzeichnet**, daß ein an der Lenkwelle (3) drehfest befestigter Teil (5) über wenigstens ein vorzugsweise von einem Bowdenzug (13) gebildetes Übertragungsorgan mit einer Schaltgabel (23) derart verbunden ist, daß bei einer Verdrehung der Lenkwelle (3) die Schaltgabel (23) bewegt wird, und daß die Schaltgabel (23) in eine die Sperreinrichtung betätigende, verschiebbare Schaltmuffe (24,53,70,90,110,121,159,168) eingreift.

2. Sperre nach Anspruch 1, dadurch gekennzeichnet, daß die Sperreinrichtung durch den Lenkeinschlag beeinflußbar ist.

3. Sperre nach Anspruch 1 oder 2, dadurch gekennzeichnet, daß die Sperreinrichtung durch die Lenkrichtung beeinflußbar ist.

4. Sperre nach Anspruch 1, 2 oder 3, dadurch gekennzeichnet, daß die Sperreinrichtung unmittelbar von der Lenkbewegung des Kraftfahrzeuges beeinflußbar ist.

5. Sperre nach Anspruch 1, 2 oder 3, dadurch gekennzeichnet, daß die die Differentialwirkung steuernde Drehzahldifferenz bzw. Drehmomentdifferenz zwischen wenigstens zwei Ausgangswellen und/oder der Eingangswelle und wenigstens einer Ausgangswelle des Getriebes von der Lenkbewegung des Kraftfahrzeuges beeinflußbar ist.

6. Sperre nach Anspruch 1, dadurch gekennzeichnet, daß zur Erfassung des Lenkwinkels das Übertragungsorgan (13) radial zum Mittelpunkt der Lenkwelle (3) von dem an dieser drehfest befestigten Teil (5) absteht.

7. Sperre nach Anspruch 1, dadurch gekennzeichnet, daß zur Erfassung des Lenkeinschlages das Übertragungsorgan (13) tangential zu einem Kreis mit dem Mittelpunkt der Lenkwelle (3) als Mittelpunkt von dem an dieser drehfest befestigten Teil (5) absteht.

8. Sperre nach Anspruch 6 oder 7, dadurch gekennzeichnet, daß die Befestigungsstelle des Übertragungsorganes (13) an dem an der Lenkwelle (3) drehfest befestigten Teil (5) veränderbar ist.

9. Sperre nach Anspruch 1, dadurch gekennzeichnet, daß die Schaltgabel (23) über einen vom Übertragungsorgan (13) bewegbaren Schlepphebel (27) betätigt wird.

10. Sperre nach einem der Ansprüche 1 bis 9, dadurch gekennzeichnet, daß die Schaltmuffe (53) mit wenigstens einem Paar von sich etwa in Verschieberichtung derselben erstreckenden Steuerkanten mit sich in Verschieberichtung ändernden\ Abstand versehen ist, zwischen welchen ein quer zur Verschieberichtung bewegbarer Bolzen (51) der Sperreinrichtung geführt ist, wobei der kleinste Abstand zwischen den Steuerkanten etwa dem Bolzendurchmesser entspricht.

11. Sperre nach einem der Ansprüche 1 bis 9, dadurch gekennzeichnet, daß die Schaltmuffe (90,100) mit sich etwa in Verschieberichtung erstreckenden schrägen Steuerflächen (97,98,111) versehen ist, die mit der Stirnfläche von Sperrgliedern (91,92,112) der Sperreinrichtung zusammenwirken und dabei eine Längsverschiebung der Sperrglieder bewirken.

12. Sperre nach einem der Ansprüche 1 bis 11, dadurch gekennzeichnet, daß das Differentialgetriebe mit einer Selbstsperrkupplung versehen ist, in der die Sperreinrichtung angeordnet ist (Fig.15).

13. Sperre nach einem der Ansprüche 1 bis 12, dadurch gekennzeichnet, daß das Differentialgetriebe oder die Selbstsperrkupplung mit einem Sollwertregler versehen sind, der bei Auftreten der Drehzahldifferenz bzw. Drehmomentdifferenz die Sperreinrichtung betätigt, und daß dieser Sollwertregler von der Lenkbewegung des Kraftfahrzeuges beeinflußt ist (Fig.17).

## Claims

1. A locking device for a differential of a motor vehicle, having a locking means provided in the differential or in a part in driving connection with a shaft thereof, for instance a locking multiple disk clutch (85, 130), mechanically acting means (141) infinitely variably actuating the locking means in the event of a difference in the number of revolutions per minute or a difference in the torque between at least two output shafts and/or the input shaft and at least one output shaft of the differential or the part in driving relation thereof, as well as a function of the steering motion (3) of the vehicle and thus at least partly cancelling the differential effect, characterized in that a part (5) non-rotatably attached to the steering axle (3) is connected via at least one transmission element preferably farmed by a Bowden wire (13) to a toggle fork (23) in such a manner that the toggle fork is moved on rotation of the steering axle (3) and the toggle fork (23) engages a displaceable shifting sleeve (24, 53, 70, 90,110, 121, 159, 168) actuating the locking means.

2. The locking device according to claim 1, wherein the locking means is subjectable to the influence of the steering radius.

3. The locking device according to claim 1 or 2, wherein the locking means is subjectable to the influence of the steering direction.

4. The locking device according to claim 1, 2 or 3, wherein the locking means is directly subjectable to the steering motion of the motor vehicle.

5. The locking device according to claim 1, 2 or 3, wherein the difference in revolutions per minute or the difference in torque between at least two output shafts and/or the input shaft and at least one output shaft of the gear controlling the differential effect is subjectable to the steering motion of the motor vehicle.

6. The locking device according to claim 1, wherein for detecting the steering angle, the transmission element (13) projects radially to the center of the steering axle (3) from the part (5) non-rotatably attached thereto.

7. The locking device according to claim 1, wherein for detecting the steering radius, the transmission element (13) projects tangentially to a circle with the center of the steering axle (3) as the center of the part (5) non-rotatably attached thereto.

8. The locking device according to claim 6 or 7, wherein the site of attachment of the transmission element (13) on the part (5) non-rotatably attached to the steering axle (3) is changeable.

9. The locking device according to claim 1, wherein the toggle fork (23) is actuated via a drag lever (27) movable by the transmission element (13).

10. The locking device according to any one of the claims 1 to 9, wherein the shifting sleeve (53) is provided with at least one pair of steering edges extending approximately in shifting direction thereof and at a distance changing in shifting direction, between which steering edges a bolt (51) of the locking means movable transversely to the shifting direction is passing, the smallest distance between the steering edges approximately corresponding to the diameter of the bolt.

11. The locking device according to any one of the claims 1 to 9, wherein the shifting sleeve (90, 100) is provided with inclined steering surfaces (97, 98, 111) approximately extending in shifting direction and cooperating with the front face of locking links (91, 92, 112) of the locking means and thereby effecting a longitudinal shifting of the locking links.

12. The locking device according to any one of the claims 1 to 11, wherein the differential is provided with a self-locking clutch in which the locking means is disposed (Fig. 15).

13. The locking device according to any one of the claims 1 to 12, wherein the differential or the self-locking clutch is provided with a set value control actuating the locking device when a difference in revolutions per minute or a difference in torque occurs and said set value control is subject to the influence of the steering motion of the motor vehicle (Fig. 17).

## Revendications

1. Dispositif de verrouillage pour un différentiel d'un véhicule à moteur, pourvu d'un moyen de verrouillage disposé dans le différentiel ou dans une partie en connexion motrice avec un arbre du différentiel, par exemple un embrayage à disques de verrouillage (85, 130), des moyens (141) mécaniquement actifs en cas d'une différence de tours-minute ou d'une différence de couples moteurs entre au moins deux arbres de sortie et/ou entre l'arbre moteur et au moins un arbre de sortie du différentiel ou la partie en connexion motrice duquel, lesdits moyens, assujettis au mouvement de braquage (3) du véhicule à moteur, actionnant par réglage continu le moyen de verrouillage pour au moins partiellement compenser l'effet du différentiel, caractérisé en ce qu'une partie (5) attachée résistante à la torsion à l'arbre de direction (3) est reliée par l'intermédiare d'un organe de transmission, de préférence en forme d'un câble Bowden (13), à une fourchette articulée (23) de telle manière que la fourchette articulée (23) est actionnée par torsion de l'arbre de direction (3) et que la fourchette articulée (23) s'engrène dans un manchon de vitesse (24, 53, 70, 90, 110, 121, 159, 168) déplaçable et actionnant le moyen de verrouillage.

2. Dispositif de verrouillage selon la revendication 1, caractérisé en ce que le moyen de verrouillage est influençable par le rayon de direction.

3. Dispositif de verrouillage selon la revendication 1 ou 2, caractérisé en ce que le moyen de verrouillage est influençable par la direction de braquage.

4. Dispositif de verrouillage selon la revendication 1, 2 ou 3, caractérisé en ce que le moyen de verrouillage est directement influençable par le mouvement de braquage du véhicule à moteur.

5. Dispositif de verrouillage selon la revendicaton 1, 2 ou 3, caractérisé en ce que la différence de tours-minute ou la difference de couples moteurs entre au moins deux arbres de sortie et/ou entre l'arbre moteur et au moins un arbre de sortie de la boîte de vitesses est influençable par le mouvement de braquage du véhicule à moteur.

6. Dispositif de verrouillage selon la revendication 1, caractérisé en ce que pour déterminer l'angle de braquage, l'organe de transmission (13) saillit radialement par rapport au centre de l'arbre de direction (3) de la partie (5) reliée résistante à la torsion audit arbre.

7. Dispositif de verrouillage selon la revendication 1, caractérisé en ce que pour déterminer le rayon de direction, l'organe de transmission (13) saillit tangentialement par rapport à un cercle avec le centre de l'arbre de direction (3) comme centre de la partie (5) reliée résistante à la torsion audit arbre.

8. Dispositif de verrouillage selon la revendication 6 ou 7, caractérisé en ce que le lieu de fixage de l'organe de transmission (13) à la partie (5) reliée résistante à la torsion à l'arbre de direction (3) est changeable.

9. Dispositif de verrouillage selon la revendication 1, caractérisé en ce que la fourchette articulée (23) est actionnée par l'intermédiare d'un levier remorqueur (27) mobile par l'organe de transmission (13).

10. Dispositif de verrouillage selon une des revendications 1 à 9, caractérisé en ce que le manchon de vitesse (53) est pourvu d'au moins une paire de bords de direction s'étendant à-peu-près dans la direction de déplacement dudit manchon à distance changeante en direction de déplacement, un boulon (51) du moyen de verrouillage mobile transversalement par rapport à la direction de déplacement passant entre lesdits bords, la moindre distance entre les bords de direction étant à-peu-près égale au diamètre du boulon.

11. Dispositif de verrouillage selon une des revendications 1 à 9, caractérisé en ce que le manchon de direction (90, 100) est pourvu de surfaces de direction (97, 98,111) inclinées et s'étendant à-peu-près en direction de déplacement et coopérant avec la face d'éléments de verrouillage (91, 92, 112) du moyen de verrouillage pour effectuer un déplacement longitudinal des éléments de verrouillage.

12. Dispositif de verrouillage selon une des revendications 1 à 11, caractérisé en ce que le différentiel est pourvu d'un embrayage à autoblocage dans lequel le moyen de verrouillage est disposé (Fig. 15).

13. Dispositif de verrouillage selon une des revendications 1 à 12, caractérisé en ce que le différentiel ou l'embrayage à autoblocage est pourvu d'un régulateur de la valeur de consigne actionnant le moyen de verrouillage en cas de différence de tours-minute ou de différence de couples moteurs et que ledit régulateur de la valeur de consigne est influençable par le mouvement de braquage du véhicule à moteur (Fig. 17).
